# FASCICULE DE BREVET EUROPEEN

(11) **EP 0 850 810 B1**
(45) Date de publication et mention de la délivrance du brevet: **21.03.2001**
(21) Numéro de dépôt: 97402784.9
(22) Date de dépôt: 19.11.1997
(51) Int. Cl.: B60R 22/26

(54) **Siège pour véhicule automobile à ceinture de sécurité embarquée et agencement de siège dans l'habitacle du véhicule**
Kraftfahrzeugsitz mit integriertem Sicherheitsgurt und Sitzvorrichtung im Fahrzeuginnenraum
Motor vehicle seat with integrated safety belt and sit arrangement in the vehicle interior

(30) Priorité: 24.12.1996 FR 9615993
(43) Date de publication de la demande: 01.07.1998
(73) Titulaire: FAURECIA SIEGES D'AUTOMOBILES S.A., 92100 Boulogne (FR)
(72) Inventeur: Fourrey, Franqois, 45290 Nogent Sur Vernisson (FR); Laporte Pierre, 45290 Nogent Sur Vernisson (FR)
(74) Mandataire: Burbaud, Eric

(56) Documents cités:
- DE-A- 3 039 598
- US-A- 4 973 083

## Description

La présente invention concerne un siège pour véhicule automobile à ceinture de sécurité embarquée et un agencement de ce siège dans l'habitacle du véhicule.

On connaît déjà dans l'état de la technique un siège pour véhicule automobile, du type décrit dans le préambule de la revendication 1.

FR-A-2 699 973 (FR-A-92 15 857) décrit un siège de ce type pouvant être accroché de façon amovible sur le plancher de l'habitacle d'un véhicule automobile du genre monocorps.

Pour diverses raisons, liées notamment au comportement de la ceinture de sécurité lors d'un choc, l'extrémité commune aux brins thoracique et abdominal est placée sur le côté intérieur du siège. Par conséquent, dans le cas d'un siège gauche, l'extrémité commune aux brins thoracique et abdominal est placée sur la droite du siège, et dans le cas d'un siège droit, cette extrémité commune est placée sur la gauche du siège.

Cette symétrie chirale entre les points d'ancrage de deux sièges gauche et droit ne permet pas d'intervertir ces deux sièges dans l'habitacle.

Les constructeurs de sièges à ceinture de sécurité embarquée doivent donc prévoir des lignes de fabrication séparées, pour les sièges gauches d'une part, et pour les sièges droits d'autre part. Ceci augmente le prix de revient global du véhicule.

L'invention a notamment pour but de proposer un siège amovible muni d'une ceinture embarquée, formant de façon réversible aussi bien un siège gauche qu'un siège droit.

A cet effet, l'invention a pour objet un siège pour véhicule automobile, du type précité, caractérisé par la partie caractérisante de la revendication 1.

D'autres caractéristiques de ce siège sont décrites dans les revendications 2 à 6.

L'invention a également pour objet un agencement d'un siège, tel que défini ci-dessus, dans l'habitacle d'un véhicule automobile, caractérisé en ce que le siège est accroché de façon amovible sur une partie de la caisse du véhicule formant un plancher de l'habitacle.

L'invention sera mieux comprise à la lecture de la description qui va suivre donnée uniquement à titre d'exemple et faite en se référant aux dessins annexés dans lesquels :
- la figure 1 est une vue latérale schématique en élévation d'un siège selon l'invention agencé dans l'habitacle d'un véhicule automobile ;
- la figure 2 est une vue de face du siège représenté à la figure 1, formant un siège gauche ;
- la figure 3 est une vue partielle, similaire à la figure 1, représentant le dossier du siège;
- la figure 4 est une vue similaire à la figure 2, dans laquelle le siège forme un siège droit ;
- la figure 5 est une vue de dessus, de détail, d'un des renvois supérieurs du siège représenté sur les figures précédentes ;
- la figure 6 est une vue en coupe suivant la ligne 6-6 de la figure 5 ;
- la figure 7 est une vue de détail des deux pênes de la ceinture de sécurité du siège représenté sur les figures 1 à 4.

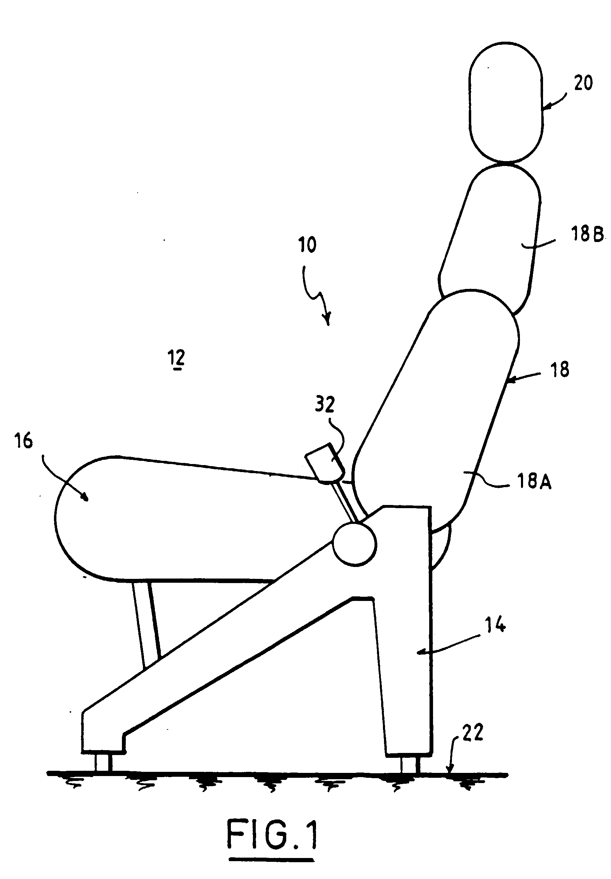

On a représenté sur les figures 1 à 4 un siège 10 selon l'invention, agencé dans un habitacle 12 de véhicule automobile, par exemple du type monocorps.

De façon classique, le siège 10 comprend un piétement 14, une assise 16 et un dossier 18 surmonté d'un appui-tête 20.

Le dossier 18 comporte éventuellement deux parties inférieure 18A et supérieure 18B articulées l'une au-dessus de l'autre.

Le piétement 14 est accroché de façon amovible sur une partie de la caisse du véhicule formant un plancher 22 de l'habitacle.

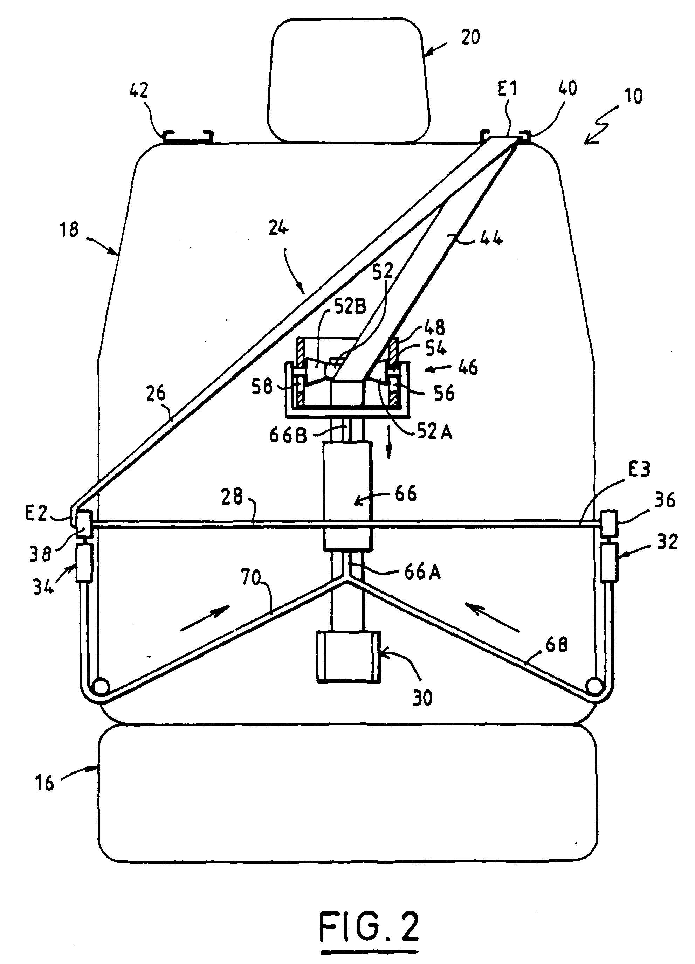

Le siège 10 comprend également une ceinture de sécurité 24 embarquée, représentée sur les figures 2 à 4. Sur ces figures, la ceinture 24 est représentée en position d'utilisation par un occupant (non représenté) assis dans le siège.

La ceinture 24 est munie de trois points d'ancrage portés par le siège.

La ceinture 24 comporte deux brins thoracique 26 et abdominal 28 reliés à ces points d'ancrage.

Le brin thoracique 26 comporte une extrémité supérieure E1 et une extrémité inférieure E2 commune avec le brin abdominal 28.

Dans ce qui suit, les orientations avant, arrière, gauche et droite correspondent aux orientations habituelles de l'occupant assis dans le siège.

Lorsque la ceinture 24 est utilisée, les extrémités E1,E2 du brin thoracique 26 sont placées sur des côtés opposés gauche et droit du siège, si bien que le brin thoracique 24 s'étend obliquement de haut en bas du siège.

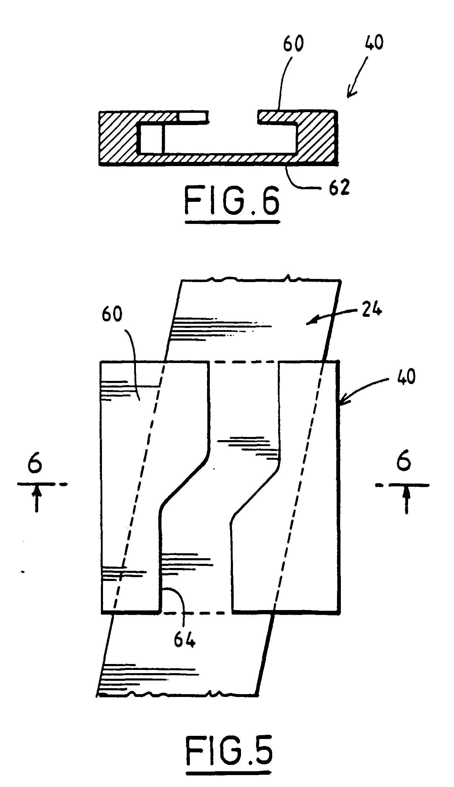

Les extrémités E1,E2 du brin thoracique 26 sont réversibles entre la gauche et la droite du siège 10, de manière que ce siège puisse former aussi bien un siège gauche, comme cela est représenté sur la figure 2, qu'un siège droit, comme cela est représenté sur la figure 4.

On notera que dans le cas d'un siège gauche, l'extrémité E2 commune aux brins thoracique 26 et abdominal 28 est disposée sur la droite du siège, et que dans le cas d'un siège droit, cette extrémité E2 est disposée sur la gauche du siège.

Une première extrémité de la ceinture 24 est accrochée sur un enrouleur 30 à rappel automatique, de type classique.

Cet enrouleur 30, formant un premier point d'ancrage de la ceinture, est disposé sensiblement au milieu entre les côtés gauche et droit du siège.

On notera que pour des raisons de clarté, on a représenté, sur les figures 2 à 4, l'enrouleur 30 placé en bas du dossier 18. Cependant, de préférence, l'enrouleur 30 est fixé sur une partie arrière du piétement 14.

Les deuxième et troisième points d'ancrage de la ceinture sont matérialisés par deux organes femelles d'accrochage gauche 32 et droit 34, appelés boucles.

Ces boucles 32,34 sont destinées à coopérer avec des organes mâles d'accrochage, portés par la ceinture 24, appelés, l'un pêne d'extrémité 36, et l'autre pêne intermédiaire 38.

Le pêne d'extrémité 36 est accroché sur la seconde extrémité de la ceinture 24 correspondant à l'extrémité E3 du brin abdominal 28 opposée à l'extrémité commune E2. Le pêne intermédiaire 38 est relié à l'extrémité commune E2, de manière à pouvoir coulisser le long de la ceinture 24.

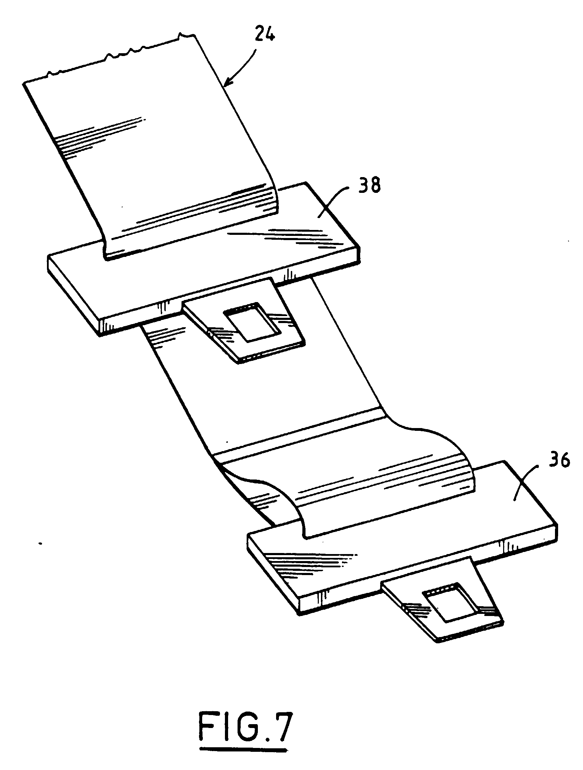

Les pênes 36,38, représentés plus en détail sur la figure 7, sont destinés à être accrochés,de façon réversible entre la gauche et la droite du siège 10, dans les deux boucles 32,34.

Deux renvois supérieurs de ceinture gauche 40 et droit 42 sont portés par le dessus du dossier 18.

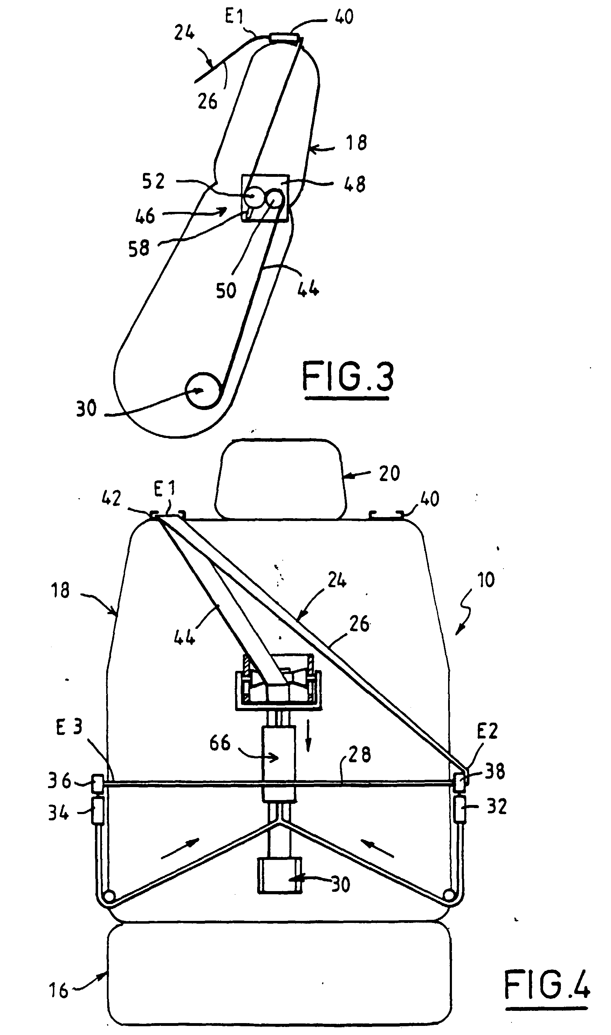

En se référant notamment à la figure 3, on voit que la ceinture 24 comporte un brin de liaison 44 s'étendant, d'amont en aval, entre l'enrouleur 30 et l'un des renvois 40,42.

L'extrémité supérieure El du brin thoracique 26 est reliée à l'enrouleur 30, par l'intermédiaire du brin de liaison 44, en passant, de façon réversible entre la gauche et la droite du siège 10, dans l'un des renvois 40,42.

Le brin de liaison 44 s'étend à travers un guide 46 porté par le dossier 18 et disposé sensiblement au milieu entre les côtés gauche et droit du siège.

Le guide 46 comporte un support 48 et deux galets de guidage amont 50 et aval 52 montés tournants dans le support 48 autour d'axes sensiblement horizontaux et transversaux au siège, de manière à imposer au brin de liaison 44 un trajet en chicane dans le guide 46.

Le support 48 est fixé, par exemple, sur l'armature du dossier 18, de préférence au voisinage d'un axe d'articulation des deux parties 18A,18B du dossier.

En se référant notamment aux figures 2 et 4, on voit que l'axe de rotation du galet aval 52 est matérialisé par une broche 54 montée déplaçable suivant une direction qui lui est sensiblement perpendiculaire dans des fentes sensiblement verticales 56,58, formant paliers, ménagées dans le support 48.

Le galet aval 52 a de préférence une forme générale en diabolo ou en hyperboloïde de révolution. Ainsi, les extrémités gauche et droite de ce galet 52 sont délimitées respectivement par deux joues 52A,52B convergentes l'une vers l'autre, de manière à faciliter l'inclinaison vers la gauche ou vers la droite du tronçon de brin de liaison 44 s'étendant depuis le guide 46 vers l'un des renvois gauche 40 et droit 42.

En se référant aux figures 5 et 6, sur lesquelles le renvoi à gauche 40 est représenté plus en détail, on voit que ce dernier a une forme générale de passant allongé et aplati, de section transversale sensiblement rectangulaire, délimitée par deux grands côtés opposés supérieur 60 et inférieur 62 entre lesquels est guidée la ceinture 24.

Le grand côté supérieur 60 comporte une fente 64 s'étendant, le long du renvoi 40, sensiblement suivant une ligne brisée.

Cette fente 64 permet à un utilisateur d'introduire la ceinture 24 dans le renvoi 40 et d'extraire cette ceinture du renvoi 40, ceci sans risque que la ceinture 24 ne s'échappe involontairement du renvoi dans lequel elle a été introduite.

Les renvois gauche 40 et droit 42 se déduisent l'un de l'autre par une symétrie chirale. Chacun des renvois 40,42 guide le brin thoracique 26 vers le côté du siège qui lui est opposé.

Le siège 10 comporte également un prétensionneur pyrotechnique 66 de ceinture actionné, en cas de choc subi par le véhicule, par des moyens classiques. Ce prétensionneur 66 est muni d'une première extrémité 66A, reliée par des moyens classiques à câbles 68,70, aux deux boucles 32,34, et d'une seconde extrémité 66B reliée, par un montage en chape, à la broche 54 portant le galet aval 52.

L'actionnement du prétensionneur 66 provoque la rétraction de ses extrémités 66A,66B l'une vers l'autre, de manière à solliciter les boucles 32,34 et le guide 46 dans des directions tendant à tendre les brins thoracique 26 et abdominal 28 de la ceinture, suivant les flèches représentées sur les figures 2 et 4.

Le siège 10 est très simple à utiliser.

Lorsque le siège 10 forme un siège gauche, par exemple un siège de conducteur, la ceinture 24 passe dans le passant gauche 40 et le pêne d'extrémité 36 est accroché dans la boucle gauche 32.

L'occupant du siège peut utiliser la ceinture 24 de façon analogue à une ceinture classique en accrochant le pêne intermédiaire 38 dans la boucle droite 34, après s'être installé dans le siège, comme cela est représenté sur la figure 2.

Pour quitter le siège, l'occupant décroche la ceinture 24 en séparant le pêne intermédiaire 38 de la boucle droite 34, le pêne d'extrémité 36 restant accroché en permanence dans la boucle gauche 32.

Pour transformer le siège gauche représenté sur la figure 2, en siège droit tel que représenté sur la figure 4, l'utilisateur déplace le siège amovible de la gauche vers la droite de l'habitacle, puis extrait la ceinture 24 du renvoi gauche 40 pour la placer dans le renvoi droit 42 et enfin accroche le pêne d'extrémité 36 dans la boucle droite 34.

La ceinture 24 est alors utilisable comme une ceinture classique en accrochant le pêne intermédiaire 38 dans la boucle gauche 32 ou en décrochant ce pêne 38 de cette boucle 32, le pêne d'extrémité 36 restant en permanence accroché dans la boucle droite 34.

On notera que le changement entre les configurations gauche et droite du siège est très simple à réaliser, les deux pênes 36,38 et le guide 46 permettant notamment d'éviter le vrillage de la ceinture lors du passage d'une configuration à l'autre.

Par ailleurs, en cas de choc subi par le véhicule, le prétensionneur 66 permet de tendre simultanément les trois extrémités E1 à E3 des brins thoracique et abdominal reliées aux trois points d'ancrage.

Bien entendu, l'invention ne se limite pas au mode de réalisation décrit ci-dessus.

En particulier, le siège n'est pas nécessairement amovible et peut être fixé définitivement dans l'habitacle, l'invention permettant d'équiper cet habitacle avec des sièges gauche et droit identiques.

## Revendications

1. Siège pour véhicule automobile, du type comprenant une ceinture de sécurité (24) embarquée munie de trois points d'ancrage portés par le siège, la ceinture (24) comportant deux brins thoracique (26) et abdominal (28) reliés aux points d'ancrage, le brin thoracique (26) comportant une extrémité supérieure (E1) et une extrémité inférieure (E2) commune avec le brin abdominal (28), les extrémités supérieure (E1) et inférieure (E2) du brin thoracique (26) étant placées, lorsque la ceinture (24) est utilisée par un occupant du siège, sur des côtés opposés gauche et droit du siège, si bien que le brin thoracique (26) s'étend obliquement de haut en bas du siège, caractérisé en ce que la ceinture (24) comprend un pêne d'extrémité (36) et un pêne intermédiaire (38) destinés à être accrochés de façon réversible entre la gauche et la droite du siège, dans deux boucles d'accrochage gauche (32) et droite (34) formant les deuxième et troisième points d'ancrage, le pêne intermédiaire (38) étant relié à l'extrémité commune (E2) des brins thoracique (26) et abdominal (28), et que l'extrémité supérieure (E1) du brin thoracique (26) est reliée au premier point d'ancrage et passe de façon réversible entre la gauche et la droite du siège, dans l'un de deux renvois supérieurs gauche (40) et droit (42) portés par le siège, de sorte que les extrémités supérieure (E1) et inférieure (E2) du brin thoracique (26) sont réversibles entre la gauche et la droite du siège.

2. Siège selon la revendication 1, caractérisé en ce qu'une première extrémité de la ceinture est accrochée sur un enrouleur (30), formant un premier point d'ancrage, disposé sensiblement au milieu entre les côtés gauche et droit du siège, le pêne d'extrémité (36) étant accroché sur la seconde extrémité (E3) de la ceinture, le pêne intermédiaire (38) étant relié à l'extrémité commune (E2) des brins thoracique (26) et abdominal (28), de manière à pouvoir coulisser le long de la ceinture (24).

3. Siège selon la revendication 2, caractérisé en ce que la ceinture (24) comporte un brin de liaison (44) s'étendant, d'amont en aval, entre l'enrouleur (30) et l'un des renvois supérieurs (40,42), à travers un guide (46) porté par le siège, ce guide comportant un support (48) et deux galets de guidage amont (50) et aval (52) montés tournants dans le support (48) autour d'axes sensiblement horizontaux et transversaux à ce siège, de manière à imposer au brin de liaison (44) un trajet en chicane, le guide (46) étant disposé sensiblement au milieu entre les côtés gauche et droit du siège.

4. Siège selon la revendication 3, caractérisé en ce que le galet aval (52) est muni d'extrémités gauche et droite formées respectivement par deux joues (52A,52B) convergentes l'une vers l'autre, de manière à faciliter l'inclinaison vers la gauche ou la droite du tronçon de brin de liaison (44) s'étendant depuis le guide (46) vers l'un des renvois supérieurs gauche (40) et droit (42).

5. Siège selon la revendication 3 ou 4, caractérisé en ce qu'il comporte un prétensionneur pyrotechnique (66) de ceinture actionné en cas de choc, muni d'une première extrémité (66A) reliée aux deux boucles d'accrochage (32,34) et d'une seconde extrémité (66B) reliée au galet aval (52), ce galet aval (52) étant monté déplaçable sensiblement perpendiculairement à son axe de rotation dans le support (48) du guide, l'actionnement du prétensionneur (66) provoquant la rétraction de ses extrémités (66A,66B) l'une vers l'autre.

6. Siège selon l'une quelconque des revendications 2 à 5, caractérisé en ce que les renvois (40,42) ont chacun une forme générale de passant allongé et aplati, de section transversale sensiblement rectangulaire, délimitée par deux grands côtés opposés (60,62) entre lesquels est guidée la ceinture (24), un des grands côtés (60) comportant une fente (64), s'étendant, le long du renvoi (40,42), sensiblement suivant une ligne brisée, permettant l'introduction de la ceinture (24) dans le renvoi (40,42) et l'extraction de cette ceinture (24) de ce renvoi (40,42).

7. Agencement d'un siège (10) selon l'une quelconque des revendications précédentes dans l'habitacle (12) d'un véhicule automobile, caractérisé en ce que le siège (10) est accroché de façon amovible sur une partie de la caisse du véhicule formant un plancher (22) de l'habitacle.

## Claims

1. A seat for a motor vehicle, of the type comprising an integrated safety belt (24) provided with three anchoring points borne by the seat, the belt (24) having two thoracic (26) and abdominal (28) strips connected to the anchoring points, the thoracic strip (26) having an upper end (E1) and a lower end (E2), the latter being in common with the abdominal strip (28), the upper (E1) and lower (E2) ends of the thoracic strip (26) being positioned, when the belt (24) is in use by an occupant of the seat, on opposing sides on the left and right of the seat, such that the thoracic strip (26) extends obliquely from top to bottom of the seat, characterised in that the belt (24) comprises an end catch (36) and an intermediate catch (38) which are intended to be reversibly hooked between the left-hand side and the right-hand side of the seat in two left (32) and right (34) hooking loops forming the second and third anchoring points, the intermediate catch (38) being connected to the end (E2) in common between the thoracic (26) and abdominal (28) strips, and in that the upper end (E1) of the thoracic strip (26) is connected to the first anchoring point and passes reversibly between the left-hand side and the right-hand side of the seat in one of two upper left (40) and right (42) return points borne by the seat, such that the upper (E1) and lower (E2) ends of the thoracic strip (26) are reversible between the left-hand side and the right-hand side of the seat.

2. A seat according to Claim 1, characterised in that a first end of the belt is hooked on a winding mechanism (30) forming a first anchoring point and disposed substantially centrally between the left-hand and right-hand sides of the seat, the end catch (36) being hooked on the second end (E3) of the belt, the intermediate catch (38) being connected to the end (E2) in common between the thoracic (26) and abdominal (28) strips, so that it can slide along the belt (24).

3. A seat according to Claim 2, characterised in that the belt (24) has a linking strip (44) extending in the downstream direction between the winding mechanism (30) and one of the upper return points (40, 42) through a guide (46) borne by the seat, this guide having a support (48) and two upstream (50) and downstream (52) guide rollers mounted in the support (48) rotatably about axes which are substantially horizontal and transverse to this seat, so that they cause the linking strip (44) to undergo a zigzag path, the guide (46) being disposed substantially centrally between the left-hand and right-hand sides of the seat.

4. A seat according to Claim 3, characterised in that the downstream roller (52) is provided with left-hand and right-hand ends which are respectively formed by two cheeks (52A, 52B) converging towards one another so that they facilitate the incline towards left or right of the section of the linking strip (44) extending from the guide (46) towards one of the upper left (40) and right (42) return points.

5. A seat according to Claim 3 or 4, characterised in that it has a pyrotechnic means (66) for pre-tensioning the belt which is actuated in the event of impact and is equipped with a first end (66A) connected to the two hooking loops (32, 34) and a second end (66B) connected to the downstream roller (52), this downstream roller (52) being mounted such that it is displaceable substantially perpendicularly to its axis of rotation in the support (48) of the guide, the actuation of the pre-tensioning means (66) bringing about the retraction of its ends (66A, 66B) towards one another.

6. A seat according to any one of Claims 2 to 5, characterised in that each of the return points (40, 42) has the general shape of an elongate flattened passage of substantially rectangular cross-section, delimited by two long opposing sides (60, 62) between which the belt (24) is guided, one of the long sides (60) having a slot (64) extending along the return point (40, 42) substantially following an interrupted line allowing the belt (24) to be introduced into the return point (40, 42) and this belt to be drawn out of this return point (40, 42).

7. An arrangement of a seat (10) according to any one of the preceding claims in the passenger compartment (12) of a motor vehicle, characterised in that the seat (10) is removably hooked on a part of the vehicle body forming a floor (22) of the passenger compartment.

## Patentansprüche

1. Sitz für ein Kraftfahrzeug, von der Art mit einem integrierten Sicherheitsgurt (24), der mit drei am Sitz befindlichen Befestigungspunkten versehen ist, wobei der Gurt (24) ein Brustkorbband (26) und ein Bauchband (28) aufweist, die mit den Befestigungspunkten verbunden sind, wobei das Brustkorbband (26) ein oberes Ende (E1) und gemeinsam mit dem Bauchband (28) ein unteres Ende (E2) besitzt, wobei das obere (E1) und das untere Ende (E2) des Brustkorbbands (26), wenn der Gurt (24) von einem Insassen des Sitzes benutzt wird, sich auf einander entgegengesetzten, d.h. der rechten bzw. der linken Seite des Sitzes befinden, so daß das Brustkorbband (26) sich von oben nach unten quer über den Sitz erstreckt, dadurch gekennzeichnet, daß der Gurt (24) einen Endriegel (36) und einen Zwischenriegel (38) aufweist, die umkehrbar links oder rechts am Sitz in eine linke (32) bzw. eine rechte Befestigungsöse (34) eingehakt werden können, die den zweiten und den dritten Befestigungspunkt bilden, wobei der Zwischenriegel (38) mit dem gemeinsamen Ende (E2) des Brustkorbbands (26) und des Bauchbands (28) verbunden ist, und daß das obere Ende (E1) des Brustkorbbands (26) mit dem ersten Befestigungspunkt verbunden ist und umkehrbar entweder auf der linken oder auf der rechten Seite des Sitzes in einer der beiden auf dem Sitz angeordneten oberen linken (40) bzw. rechten Lenkvorrichtungen (42) verläuft, so daß das obere (E1) und das untere Ende (E2) des Brustkorbbands (26) zwischen der linken und der rechten Seite des Sitzes umkehrbar sind.

2. Sitz nach Anspruch 1, dadurch gekennzeichnet, daß ein erstes Ende des Gurts an einem Aufwickler (30) befestigt ist, der einen ersten Befestigungspunkt bildet und im wesentlichen in der Mitte zwischen der linken und der rechten Seite des Sitzes angeordnet ist, wobei der Endriegel (36) am zweiten Ende (E3) des Gurts befestigt ist, während der Zwischenriegel (38) mit dem gemeinsamen Ende (E2) des Brustkorbbands (26) und des Bauchbands (28) verbunden ist, so daß er entlang des Gurts (24) gleiten kann.

3. Sitz nach Anspruch 2, dadurch gekennzeichnet, daß der Gurt (24) ein Verbindungsband (44) aufweist, das vom Aufwickler (30) zu einer der oberen Lenkvorrichtungen (40, 42) durch eine auf dem Sitz angeordnete Führung (46) verläuft, wobei diese Führung einen Träger (48) und eine vorgeordnete (50) und eine nachgeordnete Führungsrolle (52) aufweist, die im Träger (48) um Achsen drehbar montiert sind, die im wesentlichen waagrecht und quer zu diesem Sitz liegen, um dem Verbindungsband (44) eine Ablenkstrecke aufzuzwingen, wobei die Führung (46) im wesentlichen in der Mitte zwischen der linken und der rechten Seite des Sitzes angeordnet ist.

4. Sitz nach Anspruch 3, dadurch gekennzeichnet, daß die nachgeordnete Rolle (52) mit einem linken und einem rechten Ende versehen ist, die von zwei zueinander konvergenten Wangen (52A bzw. 52B) gebildet werden, um die Links- oder Rechtsschräge des Abschnitts des Verbindungsbands (44) zu erleichtern, der sich von der Führung (46) zu einer der oberen linken (40) und rechten Lenkvorrichtungen (42) erstreckt.

5. Sitz nach Anspruch 3 oder 4, dadurch gekennzeichnet, daß er einen pyrotechnischen Gurt-Vorspanner (66) aufweist, der im Fall eines Aufpralls betätigt wird und ein erstes Ende (66A), das mit den beiden Befestigungsösen (32, 34) verbunden ist, und ein zweites Ende (66B) aufweist, das mit der nachgeordneten Rolle (52) verbunden ist, wobei diese nachgeordnete Rolle (52) im wesentlichen senkrecht zu ihrer Drehachse im Träger (48) der Führung verschiebbar montiert ist, wobei die Betätigung des Vorspanners (66) das Zusammenziehen seiner Enden (66A, 666B) zueinander bewirkt.

6. Sitz nach einem der Ansprüche 2 bis 5, dadurch gekennzeichnet, daß die Lenkvorrichtungen (40, 42) je die allgemeine Form eines länglichen und abgeflachten Durchlasses mit im wesentlichen rechteckigem Querschnitt aufweisen, der von zwei großen gegenüberliegenden Seiten (60, 62) begrenzt wird, zwischen denen der Gurt (24) geführt wird, wobei eine der großen Seiten (60) einen Schlitz (64) aufweist, der sich entlang der Lenkvorrichtung (40, 42) im wesentlichen gemäß einer gebrochenen Linie erstreckt und die Einführung des Gurts (24) in die Lenkvorrichtung (40, 42) und die Entnahme dieses Gurts (24) aus dieser Lenkvorrichtung (40, 42) ermöglicht.

7. Aufbau eines Sitzes (10) gemäß einem der vorhergehenden Ansprüche im Innenraum (12) eines Kraftfahrzeugs, dadurch gekennzeichnet, daß der Sitz (10) in lösbarer Weise an einem Teil des Fahrzeugkastens befestigt ist, der einen Boden (22) des Fahrzeuginnenraums bildet.
